# EUROPEAN PATENT APPLICATION

(11) **EP 1 942 455 A1**
(43) Date of publication of application: **09.07.2008**
(21) Application number: 06397030.5
(22) Date of filing: 29.12.2006
(51) Int. Cl.: G06Q 30/00

(54) **A contact device and a network of contact devices**

(71) Applicant: Pietilä, IImo, Kent TN4 0UH (GB)
(72) Inventor: Pietilä, IImo, Kent TN4 0UH (GB)
(74) Representative: Savela, Antti-Jussi Tapani

(57) **Abstract**

An invention relates to a device enabling face-to-face contacts between persons immediately or almost immediately when their profiles match, i.e. when the persons have similar requirements or interests. The device may be an accessory of a mobile phone and it comprises a power source such as a battery or an accumulator. The device further comprises a first radio and a second radio that use different types of wireless short-range radio technologies. The first radio is adapted to communicate with a terminal of a mobile communication network by receiving content for a profile of a user. This profile relates to a certain contact service and the content of the profile is created by means of the terminal. The second radio is adapted to communicate with another device by transmitting the profile from the device to the other device. The second radio is further adapted to communicate by receiving a message of the contact service when the transmitted profile matches with a profile of another user. In addition to the device, the invention comprises a network of above-described devices.

## Description

### Field of the invention

The present invention generally relates to a device and a network which are intended for contact services. In more detail, the invention relates to a certain type of implementation of the device and the network.

### Background of the invention

The present invention has partly the same background as the applicant's prior invention described in U.S. patent 6,934,739.

In the Internet age it is, in principle, easier to meet a person who fulfils defined requirements. It is possible to use profiles and different kinds of dating services via the Internet.

A profile is an electronic form which a person has filled. A content of the profile may disclose the person's age, height, education, hobbies, favourite food, a favourite radio channel etc. In addition, the profile may include at least one text field in which the person describes what kind of person he or she is looking for.

It is also possible that a person has filled a profile to find a certain type of product or service. As an example, the person may fill the profile to find a certain type of car at the car exhibition. Then the contact service compares the persons' profile to the profiles filled by the car retailers.

In an Internet dating service a person, who gives his/her profile to the service, describes with many words, if needed, himself/herself and his/her expectations. And people, who are checking out the profiles, can pick up the most interesting profiles. Thus, the advantage of the Internet dating service is that, the people can express their expectations straight without being discourteous. The drawback is that the first contact to an interesting person is a virtual contact, i.e. the Internet dating service usually provides an email address of the interesting person. After emailing it may be possible to meet the person behind the profile.

Instead of the Internet dating service a person can use a contact device. Then the person carries the contact device with himself/herself and the contact device communicates with other contact devices and alerts, if an interesting person carrying another contact device is located close enough.

When compared to the Internet, the contact device enables a face-to-face contact between persons immediately or almost immediately when their profiles match.

The following three figures representing the prior art are originated from the above-mentioned U.S. patent 6,934,739.

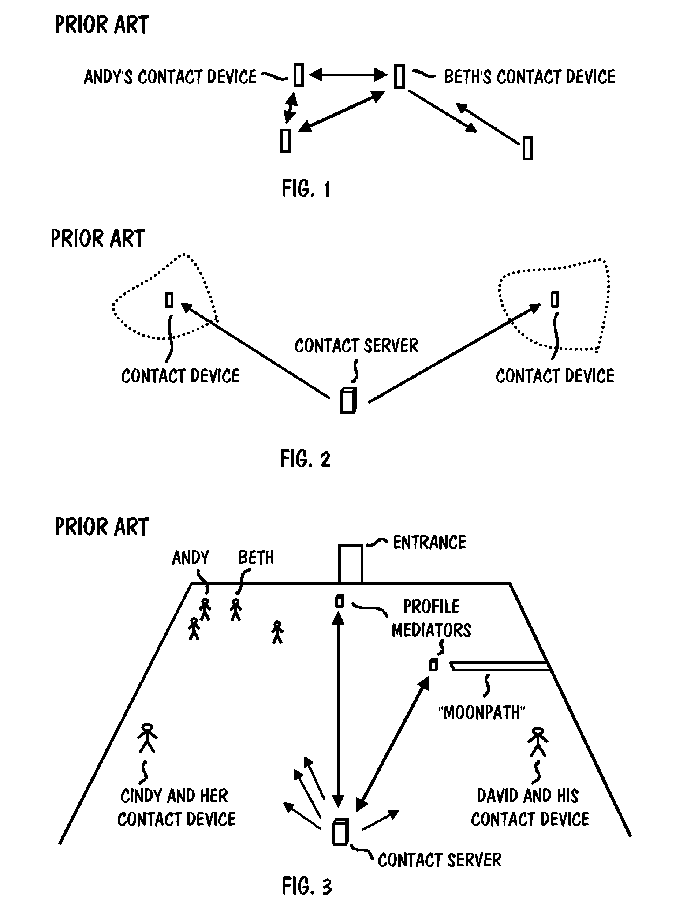

**FIG. 1** depicts the usage of contact devices. Each contact device comprises a short-range radio through which the contact device sends continuously or periodically the profile of its user.

At the same time each contact device receives profiles sent by other contact devices. Due to the short-range radios a receiving contact device must be near enough to a sending contact device.

Bluetooth is one possible wireless short-range radio technology for contact devices. Bluetooth is specified by the special interest group which comprises companies in the telecommunications, computing, and networking industries. When two contact devices equipped with Bluetooth radios come within a 10 meters range of each other, they can establish a connection together. This connection is based on a short-range radio link and the connection is possible without a line-of-sight.

In FIG. 1, four contact devices are transmitting a person's profile and three of those are receiving profiles. One contact device is too far to receive any profile. One contact device belongs to a fictitious person, Andy, and another to a fictitious person, Beth. Andy and Beth receive each other's profiles whereupon their contact devices compare the profiles. If the profiles match, the contact devices notify Andy and Beth by signalling.

It is possible that Andy and Beth are located too far from each other. Then a so-called contact server may provide services for Andy and Beth by transmitting their profiles.

**FIG. 2** depicts the contact server transmitting information to the contact devices. Dash lines describe the radio transmission areas of the contact devices. The users of the contact devices have transferred their profiles to the contact server that is connected to a powerful transmitter. It is possible that the contact server transmits only matching profiles to each contact device. Alternatively, the contact server transmits all the profiles stored in its memory to the contact devices and after that each contact device compares those profiles to its user's profile and finds the matching profiles.

If the persons having the matching profiles are located far from each other, the persons should go to some meeting point where they will notice each other. If the persons taking part in the contact service have mobile phones with them, the display of the contact device can be used for showing a phone number. Thus, the recipient of the phone number can make a call and suggest an appointment.

The contact server and so-called profile mediators can be utilized in various rooms and happenings.

**FIG. 3** shows an example of a contact system which is intended for dating. The room in FIG. 3 is a restaurant. Andy, Beth, Cindy and David have filled their profiles and they carry contact devices with them.

The contact system detects that Andy's and Beth's profiles match and informs them. Also Cindy's and David's profiles match, but they are located quite far from each other. Thus, the contact system sends a message "David, Moonpath" to Cindy and another message "Cindy, Moonpath" to David. Then they walk to a meeting point addressed by the system; the meeting point is in this case "Moonpath".

In addition, FIG. 3 shows two profile mediators, one beside the entrance of the restaurant and another beside "Moonpath". The following example describes the operation of a profile mediator.

When Cindy came in the restaurant, the profile mediator received her profile and mediated it to the contact server. When Cindy walks on "Moonpath" the other mediator informs the contact server that Cindy is currently busy and when Cindy leaves "Moonpath" the mediator informs the contact server that Cindy is free. In other words, Cindy is ready to receive messages related to matching profiles. When Cindy leaves the restaurant the profile mediator beside the entrance informs the contact server at which time the contact server stops transmitting Cindy's profile.

As shown in FIG. 3, the contact server and the profile mediator enlarge the geographical area on which profiles and messages can be transmitted. This enhances the probability to find matching profiles.

One drawback of the prior art is that a Bluetooth radio is able to operate only within a 10 meters range. The range can be enlarged by means of a contact server and profile mediators, but the enlargement of the range causes costs and is not always possible.

Another drawback related to the prior art is that contact devices are rare. Thus, if a person has a contact device, it is quite uncertain that he/she will accidentally meet another person who has a contact device and a matching profile.

### Summary of the invention

One aspect of the invention is to solve the above-mentioned drawbacks of the prior art.

Another aspect of the invention is that a large number of mobile phones include a Bluetooth radio.

Another aspect of the invention is that a Bluetooth radio is an appropriate radio for certain tasks, but it is probably not the best choice for contact services. A different kind of radio technology such as ZigBee is a much more appropriate radio technology for contact services.

Another aspect of the invention is that contact devices are rare also in the future, if they are expensive to produce.

Another aspect of the invention is that a contact device can be implemented as an accessory of a mobile phone. Wireless headset is one typical accessory of a mobile phone.

In more general terms, the contact device can be implemented as an accessory of a terminal of a mobile communication network. Then the terminal can be used for showing profiles and messages of contact services, for filling profiles, and for handling messages. Therefore a keyboard and also a display can be omitted from the contact device. This reduces the size of the contact device. The omitting of the keyboard and display also reduces power consumption of the device and, of course, the production costs of the device.

The invention is targeted to the device intended for contact services, the device comprising a power source. In addition, the device comprises a first radio and a second radio which use different types of wireless short-range radio technologies.

The device is capable to co-operate with other corresponding devices and with a terminal of a mobile communication network as follows.

The first radio of the device is adapted to communicate with the terminal by receiving content for a profile of a user. This profile is related to a contact service and the content of the profile is created by means of the terminal.

The second radio of the device is adapted to communicate with another device by transmitting the profile to the other device.

The second radio is further adapted to communicate by receiving a message of the contact service when the transmitted profile matches with a profile of another user.

Another aspect of the invention is that the message of the contact service may include a digital photo of the matching person. This digital photo can be shown in the terminal, or on a display of the contact device, if the device is equipped with the display.

Another aspect of the invention is that the device operates as a firewall between the terminal and other terminals using the same radio technology. Thus, it prevents malicious programs to intrude into the terminal.

In addition to the device, the invention is targeted to a network of contact devices.

### Brief description of the drawings

The invention is described more closely with reference to the accompanying drawings, in which
- Figure 1: depicts the usage of contact devices,
- Figure 2: depicts the usage of a contact server,
- Figure 3: shows an example of the usage of a contact system,
- Figure 4: illustrates certain advances of the invention,
- Figure 5: shows the device in accordance with the invention,
- Figure 6A: shows an example of the device,

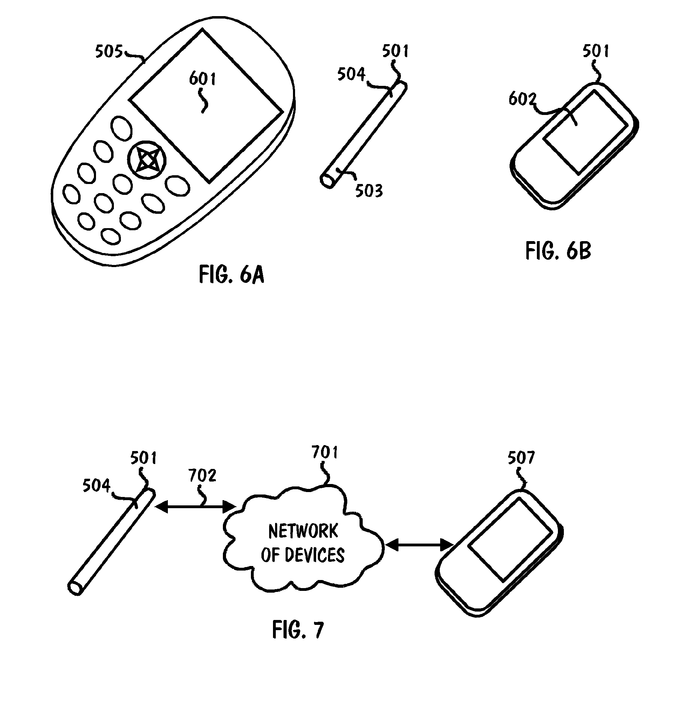

- Figure 6A: shows another example of the device,
- Figure 7: shows the network in accordance with the invention.

### Detailed description of the invention

The device in accordance with the invention comprises two short-range radios.

The first radio could be a Bluetooth radio, because a number of mobile phones, personal digital assistants (PDAs), and other types of terminals of a mobile communication network include a Bluetooth radio. Therefore the device is able to communicate through its Bluetooth radio with a majority of terminals.

Bluetooth is widely used in wireless personal area networks (PANs). Bluetooth provides a way to connect and exchange information between devices such as mobile phones, laptops, printers etc. via a secure wireless link. The operating frequency of Bluetooth is 2,4 GHz which is globally unlicensed radio frequency. The date rate of Bluetooth is approximately 1 Mbit/s and its operating range is approximately 10 meters.

The second radio of the device is preferably a ZigBee radio, because its power consumption is very low and its operating range is relatively large. ZigBee is specified by the ZigBee Alliance which is an association of certain companies. The operating frequency of ZigBee is globally 2,4 GHz, but also 868 MHz frequency band is usable in Europe and 902-928 MHz in the Americas. The date rate of ZigBee is from 20 bit/s to 250 kbit/s and the operating range is approximately 100 meters.

When comparing Bluetooth and ZigBee, the operating range of ZigBee is wider. The date rate of Bluetooth is better than in ZigBee, but the data rate has usually a minor significance in contact services. Instead, the power consumption of the radio has a great significance.

ZigBee was created, because there is a growing need for self-organizing ad-hoc wireless radio networks. Bluetooth supports networking in which devices can be nodes of so-called "ad hoc pikonets". However, ZigBee supports even better networking, because it enables mesh networks.

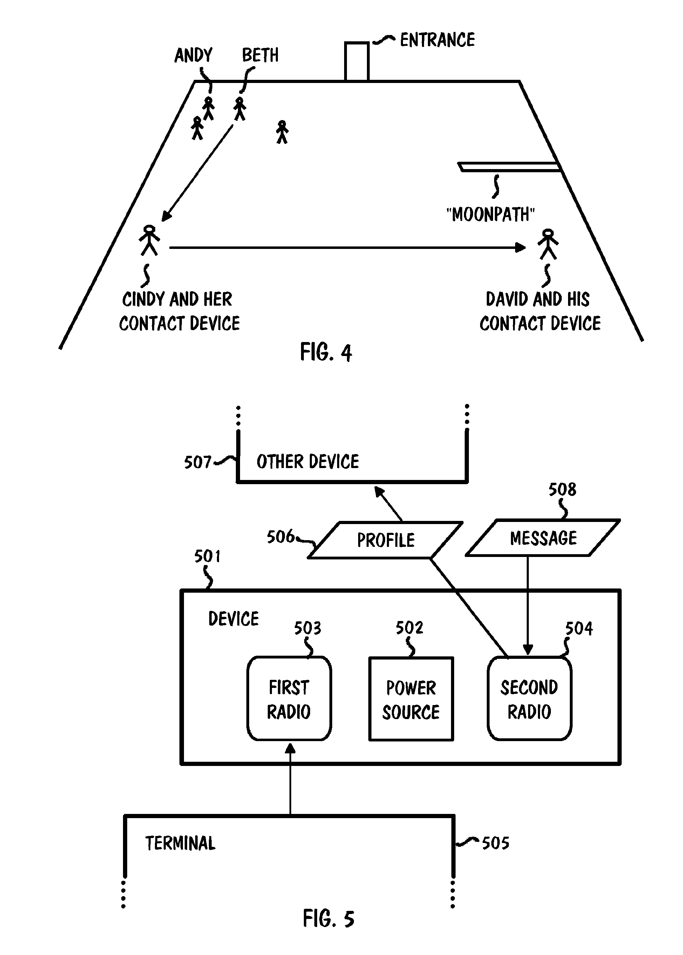

**FIG. 4** illustrates certain advances of the invention. As can be seen in the figure, there is the same restaurant and the same people as in FIG. 3. The contact server and the profile mediators shown in FIG. 3 are omitted because in FIG. 4 the people, i.e. Andy, Beth, Cindy and David, have contact devices in accordance with the invention. We may assume that a part of the people has rent the contact devices which they are carrying with them and another part of the people own their devices.

We may assume that the distance between Cindy and David is 20 meters and their contact devices include ZigBee radios. Therefore their contact devices are able to communicate with each other and exchange profiles and messages of the contact service.

ZigBee radios have the operating range of 100 meters. In addition, ZigBee supports mesh networks, making possible the following use case.

We may assume that distance between Beth and David is more than 100 meters, thus theirs contact devices cannot communicate directly with each other. However, the contact devices can communicate via Cindy's contact device, because the distance between Beth and Cindy and the distance between David and Cindy are less than 100 meters. In more detail, Beth's contact device receives, for example, Beth's profile and transmits it to David's contact device.

**FIG. 5** shows the device in accordance with the invention. The device 501 is intended for contact services and it comprises a power source 502. The power source 502 is preferably a battery or an accumulator. The device 501 further comprises a first radio 503 and a second radio 504 which use different types of wireless short-range radio technologies.

The first radio 503 is adapted to communicate with a terminal 505 of a mobile communication network by receiving content for a profile 506 of a user, the profile 506 relating to a contact service and the content of the profile being created by means of the terminal 505.

The second radio 504 is adapted to communicate with another device 507 by transmitting the profile 506 from the device 501 to the other device 507. The second radio 504 is further adapted to communicate by receiving a message 508 of the contact service when the transmitted profile 506 matches with a profile of another user. Usually, the other user is a person using the device 507.

The power consumption of the device 501 is very low when the second radio is a ZigBee radio. The second radio is basically turned on all the time when a user uses the contact service. The first radio, such as a Bluetooth radio, need to be turned on when the device 501 receives the content for the profile 506. In more detail, the device 501 receives the content from the terminal 505.

The received content includes at least one of the following items of information: text, a choice, a digit, a match percent, a digital picture, or a digital photo. A part of the items of information may concern the person who inputs them and another part of the items of information may concern the person, the product, or the service to be searched. The higher the above-mentioned match percent, the more difficult it is to find a matching person, product, or service.

The content of the profile 506 is created by means of the terminal 505. For example, the content is created so that the user has typed text through the keyboard of the terminal 505.

The terminal may show a question form on its display. Then the user can enter values such as a sex, an age, and the match percent into the question form. The question form may include choices such as: "blonde", "brunette", or "black-haired".

If the terminal 505 includes a camera, the user can took a digital photo of himself/herself using the camera. The digital photo can be included in the profile 506.

When the content of the profile 506 is ready, the content is sent from the terminal 505 to the device 501. The device 501 sends the profile 506 with the content to another device 507. The other device 507 may be the same kind of device than the device 501. Generally speaking, the other device 507 comprises a radio analogous to the second radio 504 and it is capable to operate in the contact service.

The co-operation of the terminal 505 and the device 501 can be arranged in many ways. However, the most of the processing could be performed in the terminal 505, especially when the power source 502 of the device 501 is a battery.

The terminal 505 preferably supports Java which is a known programming language developed by Sun Microsystems. In more detail, the terminal 505 is preferably able to run Java applets or Java applications.

Many new mobile phone models support Java and can download software implemented as Java applets or Java applications from the Internet. Therefore a person who is interested in a certain contact service just need to acquire the device 501, download the contact service software from the Internet to his/her mobile phone or to another type of the terminal, install the software when required, and start to use the software. This makes easy to deploy the contact service and to update the contact service software when needed.

**FIG. 6A** shows an example of the device in accordance with the invention. The figure illustrates the proportions of the device 501 and the terminal 505 when the terminal 505 is a typical mobile phone. The shape and size of the device 501 correspond to the shape and size of a cigarette.

The first radio 503 and the second radio 504 are located in the opposite ends of the device 501 in order to reduce radio interferences.

As mentioned in the text related to FIG. 5, the second radio 504 is adapted to receive the message 508 of the contact service.

In FIG. 6A the first radio 503 of the device 501 is adapted to transmit the received message 508 to the terminal 501. We may assume that the first radio 503 and the second radio 504 are connected to the same bus and at least one of the radios (503, 504) includes a processor.

The device 501 is adapted to signal due to receiving the message 508. Alternatively, the terminal 505 signals due to receiving the message 508 from the device 501. The device 501 or the terminal 505 signals, for example, by beeping, by vibrating, or by blinking a small-sized light.

The terminal 505 comprises a display 601 through which it shows the content of the received message to a user of the terminal 505.

**FIG. 6B** shows another example of the device. The device 501 shown in FIG. 6B includes a processor, a memory, and a display 602. We may assume that the processor, the memory, the display 602, the first radio 503, and the second radio 504 are connected to a same bus.

The device 501 is adapted to show content of the received message 508 through the display 602. The terminal 505 is omitted from the figure. The omitted terminal may or may not be similar to the terminal 505 shown in FIG. 6A.

When the contact service is "Making Couples" or a corresponding dating service, the message received by the device 501 preferably includes a digital photo of the matching person.

The device 501 can operate as a firewall between the terminal 505 and other terminals. Especially the device 501 shown in FIG. 6B can operate as the firewall, because it does not need to transmit messages from the other terminals to its host terminal (terminal 505). Therefore, malicious programs possibly included in the messages cannot intrude into the host terminal. Because the malicious programs cannot intrude into the host terminal, they cannot either access the mobile communication network and cause economical losses by making calls in the mobile communication network.

In addition to examples shown in FIG. 6A and FIG. 6B there are many other ways to design the device 501.

In addition to Bluetooth and ZigBee, the wireless short-range radio technologies appropriate for the device 501 include at least the following technologies: Wibree, Z-Wave, Ultra-WideBand (UWB), wireless USB, ultra high frequency (UHF).

Wibree is a technology introduced by Nokia and it is designed for wireless devices. A Wibree radio typically uses a button cell battery. The power consumption of Wibree is lower than in Bluetooth technology though its other characteristics correspond to Bluetooth. The operating range of Wibree is approximately 10 meters and its date rate is approximately 1 Mbit/s. Wibree operates in 2.4 GHZ radio bands, in more detail, in the industrial, scientific and medical (ISM) bands.

Z-Wave is a wireless communication standard developed by Zensys company and an alliance named Z-Wave. The standard is designed for low-power devices.

Ultra-WideBand (UWB) is a radio platform which operates in the 3.1 to 10.6 GHz frequency range and spreads communication over an ultra-wideband of frequencies. The date rate of UWB is very high: 480 Mbit/s at distances up to 3 meters and 110 Mbit/s at up to 10 meters.

Wireless USB is based on the above-mentioned UWB radio platform. Wireless USB is a short-range, high-speed wireless extension to the USB (Universal Serial Bus) standard that combines the speed and security of wired technology with the wireless technology.

Ultra high frequency (UHF) designates a band of electromagnetic waves whose frequency is between 300 MHz and 3 GHz. The data rate of UHF is adequate for contact services, the power consuption is low, and the operating range is very large. The operating range of UHF is a number of kilometers. When considering the invention a main problem with UHF is that the UHF band may be intended only for television broadcasts.

WI-Fi is a wireless protocol which was originally developed for wireless local area networks (LANs). The protocol has evolved and it includes nowadays several standards such as IEEE 802.11a, 802.11b, and 802.11g. The data rate of Wi-Fi is high and its operating range is large. The operating range of Wi-Fi exceeds 100 m in some outdoor conditions.

When considering the invention a main problem with Wi-Fi is the high power consumption. The same problem also concerns another standard termed WiMax. However, the situation may change, thus the invention is not limited to any specific short-range radio technology.

As mentioned in the above, ZigBee enables mesh networks. In one embodiment of the invention the device 501 and the other device 507 are nodes of a mesh network and the second radio 504 of the device 501 is adapted to transmit a profile originated from any node of the mesh network. This advance of the invention was illustrated in FIG. 4.

**FIG. 7** shows the network in accordance with the invention. The network 701 comprises at least two devices (501 and 507) and a device (501 or 507) of the network 701 comprises a power source.

The device 501 shown in FIG. 7 is analogous to the device 501 determined in FIG. 5 and the related text.

The devices 501 and 507 do not need to be exactly the same kind, but they need to include the same type of radios. In other words, the device 507 needs to include a radio capable to communicate with the second radio 504 of the device 501.

The device 501 communicates with network 701 through the second radio 504. The communication 702 between the device 501 and the network 701 includes the profile 506 transmitted from the device 501. The communication 702 also includes the message 508 which the network 701 transmits to the device 501, if the transmitted profile 506 matches with a profile of another user.

Each contact service can be considered as software. The contact service software could be downloadable through the Internet or the mobile communication network to a host terminal such as the terminal 505. The software or parts of it can be executed in the host terminal or in the device 501, or in both of them.

The use of a contact service could be controlled by user identifiers and passwords. The passwords may be user-specific passwords or they may be so-called one-time passwords.

In addition or alternatively, the use of the contact service could be controlled by a cipher key.

The cipher key may enable the use of the contact service for a certain time period. In more detail, the profiles to be transmitted are encrypted so that they can be decrypted with the cipher key. A person may buy, for example, the "Making Couples" service for a week. Then the cipher key is valid during the week after which the person cannot anymore decrypt the profiles with the cipher key in order to use the "Making Couples" service.

The user identifiers, the passwords, or the cipher key could be downloadable through the Internet or the mobile communication network to the host terminal.

The network 701 may further comprise an access controller adapted to control accesses from the device (501 or 507) to the network 701. In other words, the access controller is able to block the communication 702 between the device 501 and the network 701.

The access controller can be implemented as software that is installable to the device 501. The software may include Java applets or Java applications. However, the implementation of the device 501 is not limited to Java programming language.

Also the access controller could be downloadable to the host terminal of the device 501.

The operation of the access controller could be based on the cipher key so that the access controller is adapted to check whether the cipher key is valid or not. Alternatively, a user of the terminal just detects that he/she cannot read the profiles and messages sent from the contact service, because the cipher key required in the decryption is out-of-date.

In addition or alternatively, the operation of the access controller could be based on the user identifiers and the passwords, i.e. the access controller checks whether they are valid or not.

The device and the network in accordance with the invention can be implemented in various ways which are, however, obvious to a person skilled in the art because of the person's professional ability and the ideas described in this patent application.

The invention is defined in the following claims.

## Claims

1. A device intended for contact services, the device comprising a power source,
**characterized in that** the device further comprises a first radio and a second radio which use different types of wireless short-range radio technologies,
the first radio being adapted to communicate with a terminal of a mobile communication network by receiving content for a profile of a user, the profile relating to a contact service and the content of the profile being created by means of the terminal,
the second radio being adapted to communicate with another device by transmitting the profile from the device to the other device, and
the second radio being further adapted to communicate by receiving a message of the contact service when the transmitted profile matches with a profile of another user.

2. The device as described in claim 1, **characterized in that** the content of the profile includes at least one of the following items of information: text, a choice, a digit, a match percent, a digital picture, a digital photo.

3. The device as described in claim 1, **characterized in that** the first radio of the device is adapted to transmit the received message to the terminal.

4. The device as described in claim 1, **characterized in that** the device is adapted to signal due to receiving the message.

5. The device as described in claim 1, **characterized in that** the device further comprises a display.

6. The device as described in claim 5, **characterized in that** the device is adapted to show content of the message on the display.

7. The device as described in claim 1, **characterized in that** the device operates as a firewall between the device and the other device.

8. The device as described in claim 1, **characterized in that** the wireless short-range radio technologies include at least the following technologies: Bluetooth, Zigbee, Wibree, Z-Wave, Ultra-WideBand (UWB), wireless USB, ultra high frequency (UHF).

9. The device as described in claim 1, **characterized in that** the second radio is a ZigBee radio.

10. The device as described in claim 1, **characterized in that** the device and the other device are nodes of a mesh network and the second radio of the device is adapted to transmit a profile originated from any node of the mesh network.

11. A network of devices, a device of the network comprising a power source,
**characterized in that** the device of the network further comprises a first radio and a second radio which use different types of wireless short-range radio technologies,
the first radio being adapted to communicate with a terminal of a mobile communication network by receiving content for a profile of a user, the profile relating to a contact service and the content of the profile being created by means of the terminal,
the second radio being adapted to communicate with another device by transmitting the profile from the device to the other device, and
the second radio being further adapted to communicate by receiving a message of the contact service when the transmitted profile matches with a profile of another user.

12. The network as described in claim 1, **characterized in that** the network further comprises an access controller adapted to control accesses from the terminal to the network.
